# FASCICULE DE BREVET EUROPEEN

(11) **EP 2 792 053 B1**
(45) Date de publication et mention de la délivrance du brevet: **15.06.2022**
(21) Numéro de dépôt: 12794412.2
(22) Date de dépôt: 30.10.2012
(51) Int. Cl.: H02K 1/27

(54) **ROTOR DE MACHINE ELECTRIQUE TOURNANTE ET MACHINE ELECTRIQUE TOURNANTE COMPORTANT UN TEL ROTOR**
ROTOR FÜR EINE ROTIERENDE ELEKTRISCHE MASCHINE UND ROTIERENDE ELEKTRISCHE MASCHINE MIT EINEM DERARTIGEN ROTOR
ROTARY ELECTRIC MACHINE ROTOR AND ROTARY ELECTRIC MACHINE COMPRISING SUCH A ROTOR

(30) Priorité: 14.12.2011 FR 1161595
(43) Date de publication de la demande: 22.10.2014
(73) Titulaire: Valeo Equipements Electriques Moteur, 94046 Créteil Cedex (FR)
(72) Inventeur: LEGRANGER, Jérôme, 94000 Créteil (FR)
(86) Numéro de dépôt international: PCT/FR2012/052511
(87) Numéro de publication internationale: WO 2013/088010

(56) Documents cités:
- EP-A1- 0 391 791
- JP-A- 2001 008 391
- US-A1- 2010 194 320

## Description

### DOMAINE TECHNIQUE DE L'INVENTION.

La présente invention concerne un rotor à aimants permanents destiné à une machine électrique tournante.

L'invention concerne également une machine électrique tournante comprenant un rotor de ce type, notamment pour des applications comme moteur électrique de traction dans des véhicules automobiles électriques et hybrides ainsi que comme moteur électriques pour des accessoires ou actionneurs auxiliaires.

### ARRIERE PLAN TECHNOLOGIQUE DE L'INVENTION.

De par leurs performances accrues en termes de rendement et de puissance massique et volumique, les machines synchrones à aimants permanents trouvent aujourd'hui une large application dans le domaine des véhicules automobiles.

Ces machines électriques sont réalisables dans une large gamme de puissance et de vitesse et trouvent des applications aussi bien dans les véhicules de type « tout électrique » que dans les véhicules à bas CO₂ de types dits « mild-hybrid » et « full-hybrid » (en terminologie anglaise).

Les applications « mild-hybrid » concernent généralement des machines électriques de l'ordre de 8 à 20 kW, par exemple, un moteur électrique monté en face avant d'un moteur thermique et couplé à celui-ci par une courroie de transmission. Il est possible avec un tel moteur électrique de réduire la cylindrée de la motorisation thermique (« engine downsizing » en terminologie anglaise) en prévoyant une assistance électrique en couple qui fournit un appoint de puissance, notamment lors des reprises. De plus, une traction à faible vitesse, par exemple en environnement urbain, peut également être assurée par ce même moteur électrique.

Les applications de type « full-hybrid» concernent généralement des moteurs de 30 à 50 kW pour des architectures de type série et/ou parallèle avec un niveau d'intégration plus abouti du ou des moteurs électriques dans la chaîne de traction du véhicule.

Les remarquables performances des machines à aimants permanents actuelles sont pour une grande part dues aux développement des aimants aux terres rares tels que les aimants de type Néodyme-Fer-Bore (NdFeB), Samarium-Fer (SmFe), ou Samarium-Cobalt (SmCo), qui peuvent présenter des rémanences dépassant le tesla.

Cependant, des machines à aimants permanents comprenant un rotor présentant une structure dite "à concentration de flux" avaient de longue date permis d'obtenir des flux magnétiques importants avec des aimants de moindre rémanence, par exemples des aimants obtenus à partir de ferrites frittées.

De longue date également, les caractéristiques dimensionnelles et magnétiques ce type de structure ont été optimisées, soit en menant de nombreux essais, soit, plus récemment en réalisant des simulations sur ordinateur, de manière à améliorer le rendement électrique des machines.

Un exemple d'optimisation dimensionnelle des aimants et des pôles magnétiques d'un rotor à aimants permanents a été divulgué en 1971 dans le brevet d'invention FR 2.084.279.

L'optimisation dimensionnelle des aimants a reçu récemment un regain d'attention comme suite au renchérissement des aimants aux terres rares lié à une conjoncture géo-politique défavorable.

La mise en œuvre d'aimants aux terres rares dans un rotor de machine électrique destinée aux applications de l'automobile n'étant plus économiquement rentable, et probablement non pérenne, l'autre terme de l'alternative est constitué par les aimants basés sur des ferrites.

Mais la rémanence d'une ferrite étant plus faible que celle d'un aimant aux terres rares, il est nécessaire d'augmenter le volume de l'aimant en ferrite pour obtenir un flux magnétique équivalent.

Cette contrainte magnétique étant imposée, il va de soi que le volume des aimants en ferrite ne peut être accrû indéfiniment dans un rotor ayant une taille donnée.

On connait encore de la demande JP 2001-8391 un rotor de machine électrique selon le préambule de la revendication 1.

### DESCRIPTION GENERALE DE L'INVENTION.

Le but de la présente invention est donc d'optimiser le volume des aimants d'un rotor pour maximiser le rendement de la machine tout respectant des contraintes dimensionnelles et mécaniques spécifiées.

Elle a précisément pour objet un rotor de machine électrique tournante de la forme générale d'un cylindre comprenant une pluralité de pôles Nord et pôles Sud alternés et formés à partir d'une pluralité d'aimants permanents agencés dans des évidements se prolongeant le long d'un axe du rotor et répartis régulièrement entre une partie circonférentielle et une partie centrale de la masse magnétique du rotor de manière à définir une pluralité de sections polaires circonférentielles, les aimants permanents présentant un premier plan de symétrie radial et les sections polaires présentant un second plan de symétrie radial.

Conformément à l'invention, les aimants permanents comprennent un aimant principal et d'au moins deux aimants auxiliaires, chacun des évidements est formé par un évidement principal contenant l'aimant principal et au moins deux évidements auxiliaires contenant les aimants auxiliaires, une trace dans un plan radial de deux dits évidements auxiliaires adjacents est une figure en forme de V, chacun des aimants auxiliaires présente dans une direction circonférentielle une largeur prédéterminée LA de manière à rendre minimum une intensité statorique (Is) de la machine à couple moteur constant et un rapport r égal à la largeur prédéterminée LA sur une largeur disponible Lmax est compris sensiblement entre 15% et 30%, la largeur disponible Lmax étant égale à une distance entre l'aimant principal et une génératrice résultant de l'intersection du cylindre et du second plan de symétrie radial de la section polaire adjacente.

De préférence, les aimants auxiliaires sont agencés uniquement entre la partie circonférentielle du rotor et une partie intermédiaire s'étendant entre la partie centrale et la partie circonférentielle.

L'aimant principal et les aimants auxiliaires présentent de préférence des sections radiales sensiblement rectangulaires.

Dans ce cas, les aimants auxiliaires s'étendent sensiblement parallèlement à l'aimant principal.

On tirera bénéfice du fait que les aimants permanents du rotor de machine électrique tournante selon l'invention sont constitués de ferrite.

L'invention concerne également une machine électrique tournante qui comprend un rotor présentant les caractéristiques ci-dessus.

Ces quelques spécifications essentielles auront rendu évidents pour l'homme de métier les avantages apportés par le rotor de machine électrique tournante selon l'invention, ainsi que par la machine électrique correspondante, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure** 1 est une vue en coupe radiale simplifiée d'un rotor comprenant des aimants permanents principaux et auxiliaires selon l'invention.
La **Figure** 2 est une vue en coupe radiale partielle d'un pôle d'un rotor selon l'invention montrant un aimant permanent principal et un aimant permanent auxiliaire.
La **Figure 3** montre la variation d'une intensité statorique d'une machine électrique tournante comprenant un rotor selon l'invention en fonction d'une largeur prédéterminée des aimants auxiliaires pour un couple moteur constant.

### DESCRIPTION DU MODE DE REALISATION PREFERE DE L'INVENTION.

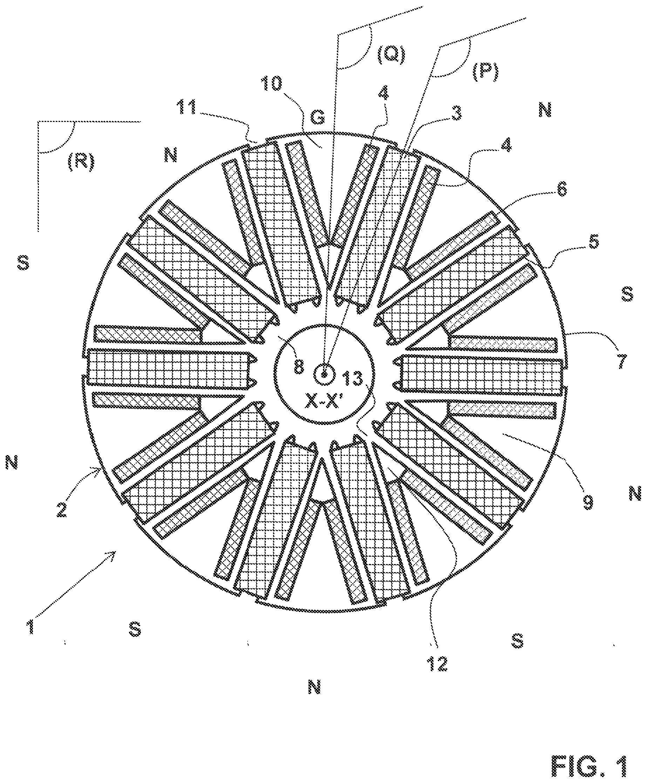

La coupe radiale simplifiée d'un rotor 1 à aimants permanents dans le mode de réalisation préféré de l'invention, représentée sur la **Figure 1****,** montre bien l'agencement dans la masse magnétique 2 des aimants permanents 3, 4 dans des évidements 5, 6 répartis régulièrement entre une partie circonférentielle 7 et une partie centrale 8 de manière à former une pluralité de pôles Nord N et pôles Sud S alternés.

Une réalisation concrète d'une machine comprenant un tel rotor 1 est par exemple un moteur/génératrice de 8 à 20 kW pour des applications dans des véhicules automobiles du type dits «mild-hybrid».

Dans son mode de fonctionnement en moteur cette machine peut être conçue pour le démarrage du moteur thermique, l'assistance en couple du moteur thermique ainsi que pour la traction électrique à faible vitesse du véhicule.

Dans une forme de réalisation particulière de cette machine, un rotor 1 comportant dix aimants permanents 3, 4 tourne à l'intérieur d'un stator (non représenté) ayant une pluralité d'encoches.

Le stator et le rotor 1 sont réalisés de manière classique avec des paquets de tôles métalliques formant des masses magnétiques 2.

Les encoches du stator sont prévues pour recevoir des bobinages statoriques (non représentés) et forment entre elles une pluralité de dents statoriques. Selon les formes de réalisation, les encoches seront prévues pour loger des bobinages concentrés, bobinés sur des grosses dents, ou bien des bobinages distribués.

Les bobinages statoriques sont parcourus par un courant statorique Is et créent un champ magnétique tournant entraînant le rotor 1. Le couple moteur fourni dépend notamment de l'intensité du courant statorique Is et du flux magnétique dans le rotor 1.

Ainsi que cela a été expliqué en préambule, le remplacement des aimants aux terres rares par des aimants en ferrite nécessite des aimants plus volumineux pour obtenir un flux magnétique similaire dans le rotor 1.

Dans la perspective de conserver un même couple moteur pour une même intensité statorique Is, le volume des aimants en ferrite doit donc être optimisé.

Les rotors à concentration de flux connus de l'état de la technique comprennent généralement des barreaux aimantés de section droite rectangulaire agencés dans des plans axiaux équi-angulaires.

Il en résulte qu'une épaisseur, selon une direction circonférentielle, d'un barreau est limitée par une longueur de la corde d'un secteur circulaire d'une partie centrale du rotor, tandis que le barreau n'occupe qu'une petite partie de la masse magnétique dans la partie circonférentielle.

Dans le but maximiser le volume des aimants 3, 4 et donc de maximiser le flux magnétique produit, l'invention propose donc d'agencer des aimants principaux 3 entre la partie circonférentielle 7 du rotor 1 et la partie centrale 8, et, dans l'espace resté disponible entre ces aimants principaux 3, dans une partie intermédiaire 9 entre la partie circonférentielle 7 et la partie centrale 8, d'agencer des aimants auxiliaires 4.

Chaque aimant principal 3 présente une première section radiale sensiblement rectangulaire. Il est agencé symétriquement par rapport à un premier plan de symétrie radial P dans un évidement principal 5 qui se prolonge le long d'un axe XX' du rotor dans la masse magnétique 2.

Deux aimants auxiliaires 4 identiques, de seconde section radiale sensiblement rectangulaire, sont placés de part et d'autre de chaque aimant principal 3. Ils sont agencés parallèlement à l'aimant principal 3, symétriquement par rapport au plan radial P, dans deux évidements auxiliaires 6 qui se prolongent le long de l'axe XX' du rotor dans la masse magnétique 2.

Deux évidements principaux consécutifs 5, dans une direction circonférentielle, et deux évidements auxiliaires 6 adjacents définissent de la sorte une section polaire 10 présentant un second plan de symétrie radial Q.

Comme le montre bien la **Figure** 1, la trace dans un plan radial R de deux évidements auxiliaires 6 adjacents est une figure en forme de "V".

Les évidements principaux 5 sont ici ouverts vers l'extérieur du rotor 1 par des fentes axiales 11. Ces fentes axiales 11 constituent des barrières de flux qui limitent un flux magnétique de fuite circulant dans la partie circonférentielle 7 du rotor 1.

Les aimants auxiliaires 4 n'occupent que la partie intermédiaire 9 du rotor 1. De la sorte, les évidements auxiliaires 6 qui les contiennent, et qui s'étendent vers la partie centrale 8 du rotor 1, créent des espaces vides 12 qui contribuent au contrôle d'un flux utile circulant dans les sections polaires 10.

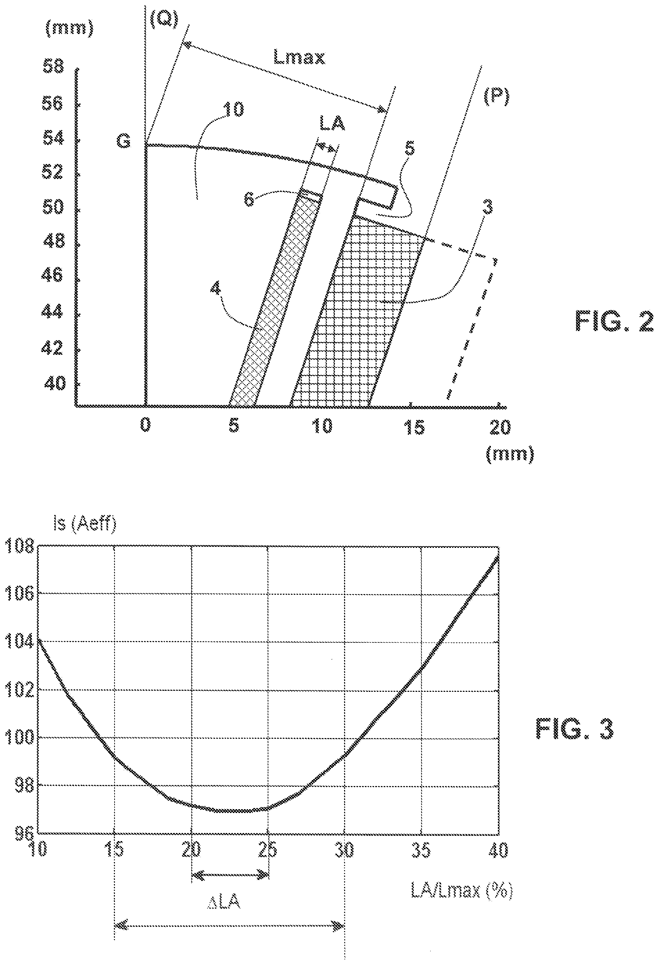

La **Figure** 2 montre les caractéristiques dimensionnelles d'un exemple de réalisation d'un pôle N, S d'un rotor 1 selon l'invention, notamment une largeur prédéterminée LA d'un aimant auxiliaire 4, et une largeur disponible Lmax dans la section polaire 10 pour agencer l'aimant auxiliaire 4 entre l'aimant principal 3 et la saillance G du pôle N, S.

Des essais avec des machines électriques comprenant un rotor 1 comportant des aimants principaux 3 et des aimants auxiliaires 4 agencés dans des évidements auxiliaires en forme de "V" tels que décrits ci-dessus, ainsi que des simulations sur ordinateur, ont en effet conduit l'entité inventive à considérer que la largeur prédéterminée LA des aimants auxiliaires était un paramètre qui influait sur le rendement électrique d'une machine.

La **Figure 3** montre le courant statorique Is nécessaire pour obtenir un même couple moteur en fonction de la largeur prédéterminée LA pour une machine de test comportant un rotor 1 dont les pôles N, S ont les caractéristiques dimensionnelles montrées sur la **Figure 2****.**

On constate qu'il existe une plage de valeurs ΔLA de la largeur prédéterminée LA, correspondant à un rapport LA/Lmax entre 20% et 25%, où l'intensité statorique Is est minimale.

Les contraintes mécaniques subies par le rotor 1 en fonctionnement ont également été prises en compte par l'entité inventive pour optimiser le volume des aimants principaux 3.

De manière générale, une hauteur et une largeur principale de l'aimant principal 3 sont fixées par une largeur minimale d'un pont bas 13 selon des critères de tenue en centrifugation.

Dans ces conditions, l'entité inventive a constaté qu'un rapport r, égal à la largeur prédéterminé LA sur la largeur disponible Lmax, compris sensiblement entre 15% et 30% permettait de maximiser le couple produit ou de minimiser le courant statorique Is nécessaire pour produire un couple donné.

Dans ce calcul r = LA/Lmax, la largeur disponible Lmax est mesurée entre l'aimant principal 3 et une génératrice G du cylindre figurant le rotor 1 située dans le second plan de symétrie radial Q d'une section polaire 10, comme l'indique la **Figure 2****.**

Ainsi que cela a été expliqué en préambule, le but essentiel de la présente invention est de permettre la mise en œuvre d'aimants 3, 4 constitués de ferrites à la place d'aimants aux terres rares, afin de réduire les coûts de fabrication tout en maintenant les performances des machines.

Mais on tire également bénéfice de l'invention en utilisant des aimants en NdFeB, liés et non frittés, avec un taux de dysprosium réduit.

Comme il va de soi, l'invention ne se limite pas au seul mode de réalisation préférentiel décrit ci-dessus.

Notamment, un nombre d'aimants auxiliaires 4 supérieur à deux conduit avantageusement à une plus grande occupation de l'espace disponible dans les sections polaires 10.

D'autres modes de réalisation basés sur des configurations d'aimants auxiliaires 4 différentes et/ ou sur des valeurs numériques différentes de celles spécifiées ci-dessus, et correspondant à d'autres essais ou simulation de machines électriques tournantes comportant un rotor du type décrit, ne sortiraient donc pas du cadre de la présente invention dans la mesure où ils résultent des revendications ci-après.

## Revendications

1. Rotor (1) de machine électrique tournante de la forme générale d'un cylindre comprenant une pluralité de pôles Nord (N) et pôles Sud (S) alternés et formés à partir d'une pluralité d'aimants permanents (3, 4) agencés dans des évidements (5, 6) se prolongeant le long d'un axe (XX') dudit rotor (1) et répartis régulièrement entre une partie circonférentielle (7) et une partie centrale (8) de la masse magnétique (2) dudit rotor (1) de manière à définir une pluralité de sections polaires (10) circonférentielles, lesdits aimants permanents (3, 4) présentant un premier plan de symétrie radial (P) et lesdites sections polaires (10) présentant un second plan de symétrie radial (Q), chacun desdits aimants permanents (3, 4) comprenant un aimant principal (3) et au moins deux aimants auxiliaires (4), chacun desdits évidements (5,6) est formé par un évidement principal (5) contenant ledit aimant principal (3) et au moins deux évidements auxiliaires (6) contenant lesdits aimants auxiliaires (4), une trace dans un plan radial (R) de deux dits évidements auxiliaires (6) adjacents est une figure en forme de V, chacun desdits aimants auxiliaires (4) présente dans une direction circonférentielle une largeur prédéterminée (LA) de manière à rendre minimum une intensité statorique (Is) de ladite machine à couple moteur constant, **caractérisé en ce que** :
- les aimants permanents sont en ferrite,
- les au moins deux évidements auxiliaires (6) sont séparés chacun dudit évidement principal correspondant (5) par une paroi de masse magnétique d'épaisseur uniforme,
- un rapport (r) égal à ladite largeur prédéterminée (LA) sur une largeur disponible (Lmax) est compris sensiblement entre 15% et 30%, ladite largeur disponible (Lmax) étant égale à une distance entre ledit aimant principal (3) et une génératrice (G) résultant de l'intersection dudit cylindre et dudit second plan de symétrie radial (Q) de ladite section polaire (10) adjacente.

2. Rotor (1) de machine électrique tournante selon la revendication 1, **caractérisé en ce que** lesdits aimants auxiliaires (4) sont agencés uniquement entre ladite partie circonférentielle (7) et une partie intermédiaire (9) dudit rotor (1) s'étendant entre ladite partie circonférentielle (7) et ladite partie centrale (8).

3. Rotor (1) de machine électrique tournante selon l'une quelconque des revendications 1 ou 2 précédentes, **caractérisé en ce que** ledit aimant principal (3) et lesdits aimants auxiliaires (4) présentent des sections radiales sensiblement rectangulaires.

4. Rotor (1) de machine électrique tournante selon la revendication 3 précédente, **caractérisé en ce que** lesdits aimants auxiliaires (4) s'étendent sensiblement parallèlement audit aimant principal (3).

5. Machine électrique tournante, **caractérisée en ce qu'**elle comprend un rotor (1) selon l'une quelconque des revendications 1 à 4 précédentes.

## Patentansprüche

1. Rotor (1) für eine drehende elektrische Maschine mit der allgemeinen Form eines Zylinders umfassend eine Mehrzahl von Nordpolen (N) und Südpolen (S), die sich abwechseln und aus einer Mehrzahl von Dauermagneten (3, 4) gebildet sind, die in Ausnehmungen (5, 6) angeordnet sind, die sich entlang einer Achse (XX') des Rotors (1) erstrecken und zwischen einem Umfangsabschnitt (7) und einem Mittelabschnitt (8) der Magnetmasse (2) des Rotors (1) regelmäßig verteilt sind, so dass sie eine Mehrzahl von Polsektionen (10) in Umfangsrichtung definieren, wobei die Dauermagneten (3, 4) eine erste radiale Symmetrieebene (P) aufweisen und die Polsektionen (10) eine zweite radiale Symmetrieebene (Q) aufweisen, wobei jeder der Dauermagneten (3, 4) einen Hauptmagneten (3) und wenigstens zwei Nebenmagneten (4) umfasst, wobei jede der Ausnehmungen (5, 6) von einer Hauptausnehmung (5), die den Hauptmagneten (3) enthält, und wenigstens zwei Nebenausnehmungen (6), die die Nebenmagneten (4) enthalten, gebildet ist, eine Spur in einer Radialebene (R) zweier der benachbarten Nebenausnehmungen (6) eine V-förmige Figur ist, jeder der Nebenmagneten (4) in einer Umfangsrichtung eine vorbestimmte Breite (LA) aufweist, um eine Statorstromstärke (Is) der Maschine mit konstantem Motordrehmoment auf ein Minimum zu bringen, **dadurch gekennzeichnet, dass**:
- die Dauermagneten aus Ferrit sind,
- die wenigstens zwei Nebenausnehmungen (6) jeweils durch eine Wand aus Magnetmasse gleichmäßiger Dicke von der entsprechenden Hauptausnehmung (5) getrennt sind,
- ein Verhältnis (r), das gleich der vorbestimmten Breite (LA) zu einer verfügbaren Breite (Lmax) ist, im Wesentlichen zwischen 15 % und 30 % liegt, wobei die verfügbare Breite (Lmax) gleich einem Abstand zwischen dem Hauptmagneten (3) und einer Erzeugenden (G) ist, die sich aus dem Schnittpunkt des Zylinders und der zweiten radialen Symmetrieebene (Q) der benachbarten Polsektion (10) ergibt.

2. Rotor (1) für eine drehende elektrische Maschine nach Anspruch 1, **dadurch gekennzeichnet, dass** die Nebenmagneten (4) nur zwischen dem Umfangsabschnitt (7) und einem Zwischenabschnitt (9) des Rotors (1) angeordnet sind, der sich zwischen dem Umfangsabschnitt (7) und dem Mittelabschnitt (8) erstreckt.

3. Rotor (1) für eine drehende elektrische Maschine nach einem der Ansprüche 1 oder 2, **dadurch gekennzeichnet, dass** der Hauptmagnet (3) und die Nebenmagnete (4) im Wesentlichen rechteckige radiale Querschnitte aufweisen.

4. Rotor (1) für eine drehende elektrische Maschine nach Anspruch 3, **dadurch gekennzeichnet, dass** sich die Nebenmagnete (4) im Wesentlichen parallel zum Hauptmagneten (3) erstrecken.

5. Drehende elektrische Maschine, **dadurch gekennzeichnet, dass** sie einen Rotor (1) nach einem der Ansprüche 1 bis 4 umfasst.

## Claims

1. Rotor (1) of a rotating electrical machine of generally cylindrical form comprising a plurality of alternating North poles (N) and South poles (S) formed from a plurality of permanent magnets (3, 4) arranged in recesses (5, 6) extending along an axis (XX') of said rotor (1) and evenly distributed between a circumferential part (7) and a central part (8) of the magnetic mass (2) of said rotor (1) so as to define a plurality of circumferential polar sections (10), said permanent magnets (3, 4) having a first radial plane of symmetry (P) and said polar sections (10) having a second radial plane of symmetry (Q), each of said permanent magnets (3, 4) comprising a main magnet (3) and at least two auxiliary magnets (4), each of said recesses (5, 6) is formed by a main recess (5) containing said main magnet (3) and at least two auxiliary recesses (6) containing said auxiliary magnets (4), a plot in a radial plane (R) of two said adjacent auxiliary recesses (6) is a V-shaped figure, each of said auxiliary magnets (4) has, in a circumferential direction, a predetermined width (LA) so as to minimize a stator current (Is) of said machine at constant motor torque, **characterized in that**:
- the permanent magnets are made of ferrite,
- the at least two auxiliary recesses (6) are each separated from said corresponding main recess (5) by a wall of magnetic mass of uniform thickness,
- a ratio (r) equal to said predetermined width (LA) to an available width (Lmax) lies substantially between 15% and 30%, said available width (Lmax) being equal to a distance between said main magnet (3) and a generatrix (G) resulting from the intersection of said cylinder and of said second radial plane of symmetry (Q) of said adjacent polar section (10).

2. Rotor (1) of a rotating electrical machine according to Claim 1, **characterized in that** said auxiliary magnets (4) are arranged only between said circumferential part (7) and an intermediate part (9) of said rotor (1) extending between said circumferential part (7) and said central part (8).

3. Rotor (1) of a rotating electrical machine according to either one of the preceding Claims 1 and 2, **characterized in that** said main magnet (3) and said auxiliary magnets (4) have substantially rectangular radial sections.

4. Rotor (1) of a rotating electrical machine according to the preceding Claim 3, **characterized in that** said auxiliary magnets (4) extend substantially parallel to said main magnet (3).

5. Rotating electrical machine, **characterized in that** it comprises a rotor (1) according to any one of the preceding Claims 1 to 4.
